# EUROPEAN PATENT SPECIFICATION

(11) **EP 2 372 553 B1**
(45) Date of publication and mention of the grant of the patent: **30.01.2013**
(21) Application number: 11171738.5
(22) Date of filing: 06.06.2008
(51) Int. Cl.: G06F 11/14

(54) **Application-based backup-restore of electronic information**
Anwendungsbasierte Sicherung/Wiederherstellung elektronischer Informationen
Sauvegarde et restauration d'informations électroniques basées sur application

(30) Priority: 08.06.2007 US 943027 P; 06.06.2008 US 135024
(43) Date of publication of application: 05.10.2011
(62) Divisional of application: 08770413.6
(73) Proprietor: APPLE INC., Cupertino, CA 95014 (US)
(72) Inventor: Cisler Pavel, Cupertino, CA 95014 (US); Lyons David, Cupertino, CA 95014 (US); Ulrich Robert, Cupertino, CA 95014 (US)
(74) Representative: Lang, Johannes

(56) References cited:
- EP-A- 1 582 982
- US-A1- 2003 167 380
- US-A1- 2006 053 332

## Description

### TECHNICAL FIELD

The disclosed implementations relate generally to storing and restoring digital data.

### BACKGROUND

Modern graphical user interfaces allow a large number of graphical objects or items to be displayed on a display screen at the same time. Operating systems, e.g., Apple Mac OS®, provide user interfaces in which a number of graphical user interface windows can be displayed, overlapped, resized, moved, configured, and reformatted according to the needs of a user or a particular application. Taskbars, menus, virtual buttons, and other user interface elements provide mechanisms for accessing and activating windows even when they are hidden behind other windows.

With the sophisticated tools available, users are encouraged not only to create and save a multitude of items in their computers, but to revise or otherwise improve on them over time. For example, a user can work with a certain file and thereafter save the file's current version on a storage device. The next day, however, the user could have had second thoughts about the revisions, or could have come up with new ideas, and therefore opens the file again.

EP1582982 (A2) discloses a technique for recovering data using a timeline-based computing environment. Data items of the application are periodically saved for recovery such that the saved data items can be used to recover the application at a point in time when the items are saved. Each saved data item can also be indexed with metadata, which are used to conduct a search to generate a list of data items according to a match between the indexed metadata and a user selected variable. Moreover, the application may comprise a communication client having multiple messages.

US2006053332 (A1) discloses systems and methods for recovering data from a backup copy and for backing up data. When a recovery operation is initiated, recovery items are selected from backup groupings of the client. The recovery items can include backup groupings, writers, and writer components. After the recovery items are selected, backed up metadata for each selected writer is retrieved from the backed up data. During a backup operation, some of the backup groupings, as well as the content of the backup groupings, can be individually selected for backup. In both backup and recovery, a visual indication may be provided to identify individual selectability.

US2003167380 (A1) discloses that a persistent snapshot is taken and maintained in accordance with a method and system for extended periods of time using only a portion of a computer readable medium of which the snapshot is taken. Multiple snapshots can be taken in succession at periodic intervals and maintained practically indefinitely. The snapshots are maintained even after powering down and rebooting of the computer system. The state of the object of the snapshot for each snapshot preferably is accessible via a folder on volume of the snapshot.

The revision process is usually straightforward if the user wants to add more material to the file or make changes to what is there. But it is typically more difficult for a user who has changed his/her mind about changes that were previously made and wants the file returned to a previous version. Application programs for word processing typically let the user "undo" previous edits of a text, at least up to a predefined number of past revisions. The undo feature also usually is configured so that the previously made revisions must be undone in reverse chronological order; that is, the user must first undo the most recently made edit, then the second-most recent one, and so on. If the user saves and closes the document and thereafter opens the document again, it might not be possible to automatically undo any previous edits.

### SUMMARY

Systems and methods are provides for storing and restoring digital data. In general, in one aspect, a system is provided. The system includes a backup component, the backup component for capturing a state of a view of a user interface of an application as part of a backup operation and a first interface coupling the backup component and the application, the interface providing a communication link between the backup component and the application such that a backup user interface can display the captured state of the view. Other embodiments of this aspect include corresponding methods, apparatus, computer program products, and computer readable media.

Implementations of the aspect can include one or more of the following features. The communication link provided by the first interface can include instructions describing how to present the backup user interface and the data to include in the backup user interface. The instructions describing how to present the backup user interface can include instructions to display the backup user interface and instructions to exit the backup user interface. Instructions describing the data to include in the backup user interface can include instructions for integrating backup data in a form of a user interface for the application.

The aspect can further include a second interface coupling the backup component to a system component, the second interface providing communication between the backup component and the system component. The communication provided by the second interface can include communication regarding a status of backup operations. The status of backup operations can include one or more of an initiation of a backup operation and a completion of a backup operation. The first interface can be a service provider interface. The application can be a mail application or an audio application.

In general, in one aspect, a method is provided. The method includes receiving from an application, while a current view of an application is displayed in a user interface, a first user input requesting that a history view associated with the current view of the application be displayed, retrieving information associated with the current view of the application, retrieving from a backup archive backup data associated with the history view, and providing the retrieved backup data and information to a backup component for presentation to the user. Other embodiments of this aspect include corresponding systems, apparatus, computer program products, and computer readable media.

Implementations of the aspect can include one or more of the following features. Retrieving information associated with the current view of the application can include retrieving format information. The format information can include information for generating a user interface layout for the application. The aspect can further include using the backup data and the format information to generate a plurality of visual representations corresponding to earlier versions of the current view of the application.

Particular embodiments of the subject matter described in this specification can be implemented to realize one or more of the following advantages. Service Provider Interfaces ("SPFs") can be used to provide efficient communication between a backup component and other system components including applications. Applications can take advantage of a backup interface to provide a backup interface for restoring data of the application.

The details of the various aspects of the subject matter described in this specification are set forth in the accompanying drawings and the description below. Other features, aspects, and advantages of the invention will become apparent from the description, the drawings, and the claims.

The invention is defined in detail in the appended independent claims 1 and 11.

### BRIEF DESCRIPTION FO THE DRAWINGS

FIG. 1 is a block diagram of an example computer system.

FIG. 2 is a block diagram of an example architecture for backup operations.

FIG. 3 is a screen shot depicting an example of a desktop user interface with multiple open applications.

FIG. 4 is a screen shot depicting an example of an initial state for a backup interface.

FIG. 5 is a screen shot depicting the backup interface of FIG. 4 where a snapshot has been selected.

FIG. 6 is a screen shot depicting the backup interface of FIG. 5 wherein a portion of a snapshot has been selected for restoration.

FIG. 7 is a screen shot showing the desktop user interface after some contents from an earlier version have been restored using the backup interface.

FIG. 8 is a screen shot depicting an example of a desktop user interface with multiple open applications.

FIG. 9 is a screen shot depicting an example of a state for a backup interface.

FIG. 10 is a screen shot depicting an example showing changed items in a backup interface.

FIG. 11 is a screen shot depicting an example backup interface.

FIG. 12 is a screen shot depicting the backup interface of Fig. 11 where a snapshot has been selected.

FIG. 13 is a screen shot depicting an example backup interface where contents of a snapshot have been selected.

FIG. 14 is a screen shot showing another example of the desktop user interface after some contents from an earlier version have been restored using the backup interface.

Like reference numbers and designations in the various drawings indicate like elements.

### DETAILED DESCRIPTION

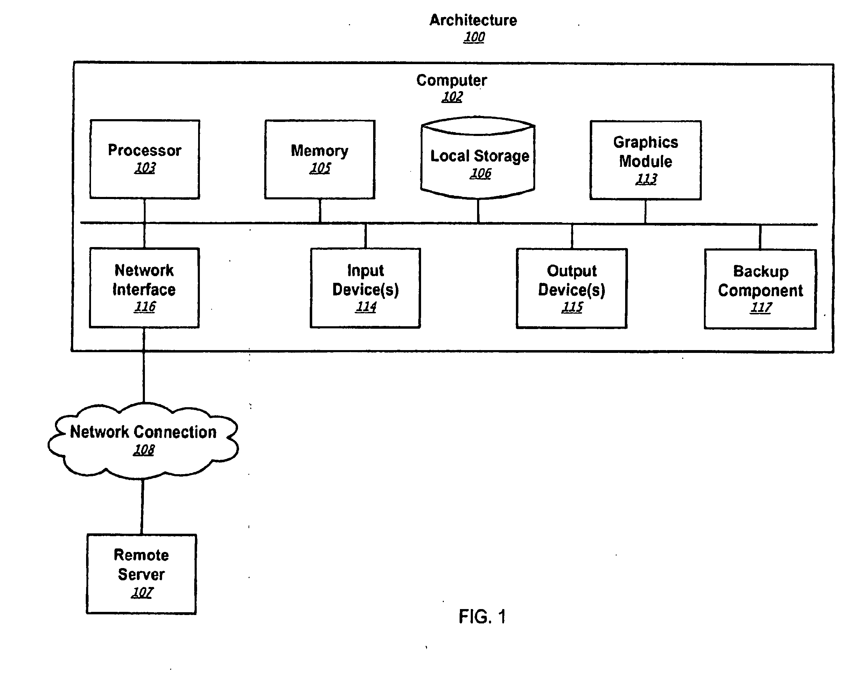

FIG. 1 is a block diagram of an example system 100. The system 100 can be used, for example, for capturing at least one earlier version of a user interface view and allowing a user to initiate a restoration based on the at least one earlier version. As used herein, a view refers to an item, element, or other content, capable of being stored and/or retrieved in an interface, that can be subjected to a backup operation by a backup component 117. For example, a user interface view can contain any number of icons, files, folders, application state information and/or machine state information, preferences, etc.

The system 100 includes a personal computer 102 communicatively coupled to a remote server 107 using a network interface 116 and a network 108 (e.g., local area network, wireless network, Internet, intranet, etc.). The computer 102 generally includes a processor 103, memory 105, one or more input devices 114 (e.g., keyboard, mouse, etc.) and one or more output devices 115 (e.g., a display device). A user interacts with the system 100 using the input and output devices 114, 115. The system 100 as shown includes various hardware elements. However, the system 100 can include hardware, software, and combinations of the two.

The computer 102 also includes a local storage device 106 and a graphics module 113 (e.g., a graphics card) for storing information and generating graphical objects, respectively. The local storage device 106 can be a computer-readable medium. The computer readable medium can be, for example, a machine-readable storage device, a machine-readable storage substrate, a memory device, a composition of matter effecting a machine-readable propagated signal, or a combination of one or more them.

While modifying a user interface view is described below with respect to a personal computer 102, it should be apparent that the disclosed implementations can be incorporated in, or integrated with, any electronic device that has a user interface, including without limitation, portable and desktop computers, servers, electronics, media players, game devices, mobile phones, e-mail devices, personal digital assistants (PDAs), embedded devices, televisions, other consumer electronic devices, etc.

One of ordinary skill in the art will recognize that the engines, methods, processes and the like that are described can themselves be an individual process or application, part of an operating system, a plug-in, an application or the like. In one implementation, the system and methods can be implemented as one or more plug-ins that are installed and run on the personal computer 102. The plug-ins are configured to interact with an operating system (e.g., MAC OS®, X, WINDOWS XP, LINUX, etc.) and to perform various functions, e.g., as described below. A system and method for modifying a user interface view can also be implemented as one or more software applications running on the computer 102. Such a system and method can be characterized as a framework or model that can be implemented on various platforms and/or networks (e.g., client/server networks, wireless networks, standalone computers, portable electronic devices, mobile phones, etc.), and/or embedded or bundled with one or more software applications (e.g., e-mail, media player, browser, etc.).

The computer 102 includes the backup component 117 that allows for the storage of multiple versions of data including the computer's files or other items, for example within the local storage 106 or in an external storage repository. In one implementation, the backup component 117 also allows a user to select any of the stored versions and initiate a restoration of the selected version in the computer 102.

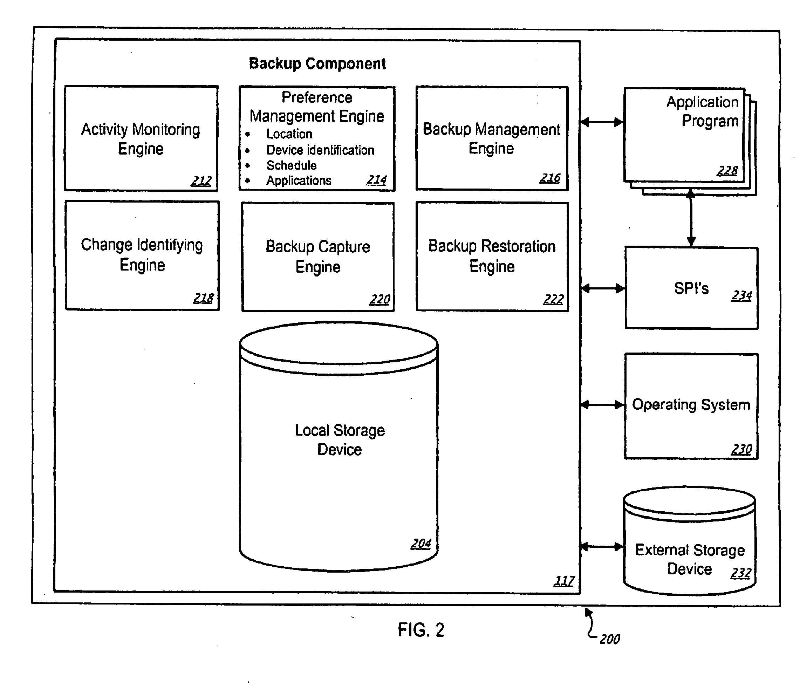

FIG. 2 is a block diagram of an example architecture 200 for backup operations. The architecture (e.g., a software architecture) 200 can be used to provide backup operations and restoration of backup data including application data (e.g., applications files, state, or other information) associated with one or more applications 228.

The backup component can interact with one or more applications 228 or the operation system 230 using one or more service provider interfaces ("SPFs") 234. The SPFs 234 facilitate interaction, for example, between the backup component 117 and a particular application 228. Particularly, the backup component 117 can utilize SPI techniques to enhance application programs with the backup functionality.

The SPFs can include tools for linking several applications 228 to the backup component 117 by using an SPI 234 to provide a similar menu or icon for each application 228 (e.g., an icon for initiating the backup component 117 from the user interface of the application 228). For example, the SPI 234 can be used by the backup component 117 when generating a backup version of a current state of the application 228 or when displaying a view of a previous state of the application and/or restoring application data. Examples of interactive communication provided to and from the backup component 117 using the SPFs 234 are described in greater detail below.

Although the SPFs 234 are shown in FIG. 2 as a separate component of the architecture 200, individual SPFs 234 can be part of applications 228, the operation system 230, or integrated in other components of system 100. Regardless of the location, the SPFs 234 can be made available by the system for use by, for example, one or more of the applications 228.

In one implementation, the backup component 117 provides backup operations and restoration capability for the system 100. Many different items or elements can be the subject of a backup operation. For example, data elements including folders, files, items, information portions, directories, images, system parameters, playlists, address books, e-mails, e-mail folders, a state of an application or state of the system, preferences (e.g., user or system preferences), and the like all can be candidates for inclusion in an archive of backup data during the backup operation, Other types of data can also be included in the backup data for the system 100. In this example, the backup component 117 includes a local storage device 204 and an external storage device 232. Backup data can be stored on either or both storage devices. Any number of local and/or external storage devices can be used by the backup component 117 for storing backup data representing one or more versions of data.

In one implementation, no local storage is provided. In one implementation, the backup component 117 runs as a background task on an operating system 230 that is not visible to the user. The backup component 117 can be capable of running across multiple user accounts.

The backup component 117 can interact with one or more of the applications 228 using the corresponding SPI 234. In one implementation, this can include providing backup operations for application data including application files, state or other items, and can further provide for user restoration of selected backup data. In one implementation, one copy of original data (e.g., folders, files, items, information portions, directories, images, system parameters, playlists, address books, e-mails, e-mail folders, application states, preferences, and the like) is stored in the system as backup data (e.g., an original version of the data). When one or more subsequent sets of backup data, or versions, of the data are generated through subsequent backup operations, the backup data can contain only the differences between a current data version and the prior backup data, thereby saving storage space. In some implementations, the storage devices 204 and 232 can be used to store the original backup data as well as links pointing to the original backup data. The links can be hard links which reference, or point to, physical data, or as another example can be symbolic links that reference another file on the storage device (e.g., by name or location). Different types of data can be scheduled to be stored on different devices or on different segments of a storage device during a backup operation. In one implementation, the backup component 117 stores the backup data of each backup operation in a format corresponding to a file system structure. As such, the backup data from each backup operation can be independently accessed and traversed as a file system hierarchy.

The backup component 117 includes an activity monitoring engine 212. In one implementation, the activity monitoring engine 212 monitors for changes within applications (e.g., application files or state) that are targeted for backup operations. A change can also include the addition of new files or other data structures, or deletion of existing ones.

In one implementation, the activity monitoring engine 212 is capable of discerning between a substantive change (e.g. the text within a document has been modified) and a nonsubstantive change (e.g. the play count within an iTunes playlist has been updated, or several changes cancel each other out) through the activity monitoring engine's 212 interaction with the applications 228. The activity monitoring engine 212 can, for example, create a list of modified elements to be used when a backup operation is eventually triggered. For example, in one implementation, only data associated with the modified elements can be included in the next backup operation.

In one implementation, the activity monitoring engine 212 can monitor the system for periods of inactivity. The activity monitoring engine 212 can then trigger a backup operation during a period of time in which the backup operation will not cause a system slowdown for an active user.

A preference management engine 214 specifies some operating parameters of the backup component 117. In one implementation, preference management engine 214 contains user-specified and/or system default application parameters for the backup component 117. These can include settings for the details of capturing and storing views of an application 228. For example, the preference management engine 214 can determine the frequency of a backup operations, the storage location for the backup data, the types of data elements (e.g., files or other items) that are to be included in the backup operations, and the events which can trigger a backup operation (periodic or event-driven, etc.).

In one implementation, the preference management engine 214 can detect that a new storage device has been added to the system and prompt the user whether the storage device should be included as a backup repository for storing backup data. Files and other items can be scheduled for a backup operation due to location (e.g. everything on the C: drive and within D:/photos), a correlation with specific applications (e.g. all pictures, music, e-mail in an inbox, an address book, and system settings), or a combination of strategies.

A backup management engine 216 coordinates the collection, storage, and retrieval of data (e.g., views) performed by the backup component 117. For example, the backup management engine 216 can trigger the activity monitoring engine 212 to monitor for activities that satisfy a requirement specified in the preference management engine 214.

A change identifying engine 218 locates specific elements (e.g., monitored files or other items within) to determine if the elements have changed. The change identifying engine 218 can be capable of discerning a substantive change from a nonsubstantive change, similar to the example described above for the activity monitoring engine 212. In one implementation, the change identifying engine 218 traverses a target set of elements (e.g., files or other items), comparing a previous version to the current version to determine whether or not a modification has occurred.

A backup capture engine 220 locates views that are to be included in the backup operation. The view (e.g., of an application) can include various elements (e.g., files, state, and other application information). The backup capture engine 220 can invoke the activity monitoring engine 212 and/or the change identifying engine 218, for example, to generate a capture list identifying data to include in a next backup operation. The backup capture engine 220 can then store data associated with the listed data in one or more targeted storage repositories. For example, the backup capture engine 220 can store the changed elements in a file system hierarchy that includes references (e.g., links) to unchanged elements. The backup capture engine 220 can track multiple version of each view included in the backup repository.

The backup component 117 includes a backup restoration engine 222 to restore previous versions of views (e.g., files or other items). In one implementation, the backup restoration engine 222 can provide a user interface (e.g., a graphical user interface) where a user can select a view or portions of a view (e.g., elements, items, etc.) to be restored.

The backup restoration engine 222 can initiate backup operations on one or more data elements or items as directed by a user, the system, or according to a specified or otherwise defined schedule. For example, the user can set up a scheduled backup operation to occur for any number of data files. The data files can be related to one another, such as when the Hies share similar attributes or a schema. For example, several files included on one particular webpage can have a similar schema and can require versions of each related file to remain consistent to display a successful webpage image.

The SPFs 234 can provide interaction between the backup component 117 and other aspects of the system 100. For example, one or more SPFs 234 can communicate various activities of the backup component 117 to the operating system 230. An SPI 234 can manage inquires regarding backup operations conducted by the backup component 117. For example, the location of backup data (e.g., a location on a particular storage device), the time when the last backup operation occurred, whether a particular element has been included in a prior backup operation, and whether a particular element is scheduled to be included in a next backup operation. Additionally, the system 100 can use the SPI 234 to instruct (e.g., sending a call) the backup component 117 to initiate a backup operation. The backup component 117 can provide a callback communicating that the backup operation has begun and/or that the backup operation is completed, interrupted, etc.

Application specific SPFs 234 allow the backup component 117 and one or more particular applications 228 to generate a backup interface that provides views of the particular applications. For example, a backup interface can be accessed through the applications 228 (e.g., though an icon or menu item in the application). The backup interface can provide a number of history views of the application in the form of a corresponding application user interface. While the backup interface has a general structure, the particular application can be used to provide details on constructing the specific user interface corresponding to the application (e.g., graphical elements, types of information presented, layout of information).

The SPFs 234 can facilitate the interaction between the backup component 117 and application 228, for example, by allowing the flow of communication and instructions to pass between the respective SPI and application. For example, an instruction from the application 228 to transition from a desktop user interface to a display of the backup user interface for the application (e.g., based on a user selected menu item or icon in the application); receiving, at the application 228, of backup data from the backup component 117 to present using in the form of the application user interface; and receiving, at the application 228, backup data for several versions of an application view with instructions to generate preview application user interfaces using the backup data. Other SPI instructions include instructions to retrieve different backup data, instructions to display different backup data, instructions to restore a particular portion of a view (e.g., file, elements, state of an application), and instructions to exit the backup interface.

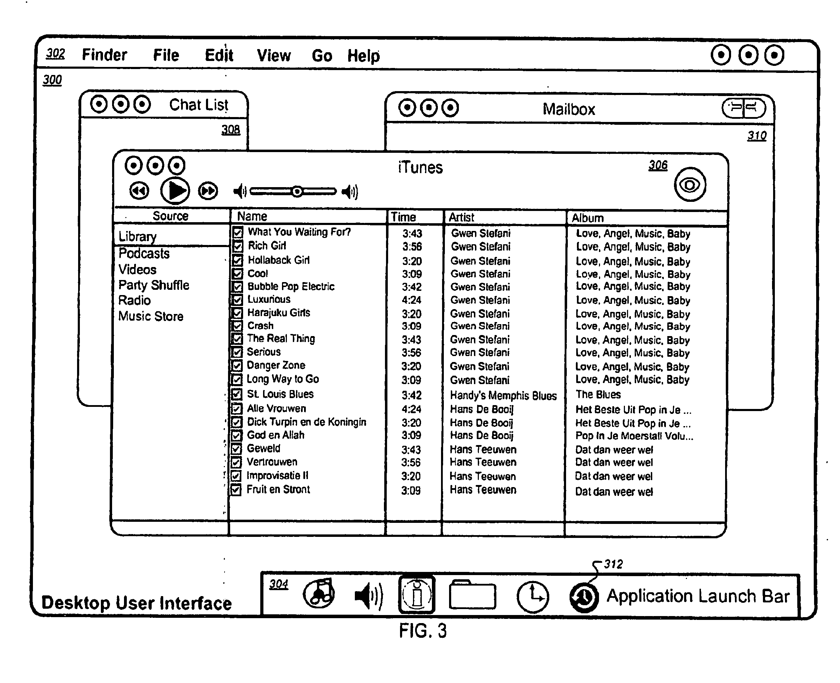

FIG. 3 is a screen shot depicting an example of a user interface 300 (e.g., a desktop user interface) with multiple open applications (e.g., applications 228). The user interface 300 can be a user interface provided by an operating system (e.g., operating system 230). The user interface 300 includes a background, a menu bar 302, an application launch bar 304, and may include windows, icons, and other elements. Other configurations are possible. The user interface 300 can have multiple applications running, any or all of which can be presented in a separate window (e.g., a separate graphical representation in the user interface 300). While working with the applications, or at some other time, a user can initiate a backup interface.

As shown in FIG. 3 a user has launched an iTunes™ application window 306 (available from Apple Inc., in Cupertino, California), which is currently presented in the foreground of the user interface 300, and a chat application 308 and a mail application 310 presented in the background of the user interface 300. In particular, the iTunes™ application 306 has a user interface displaying contents of the user's library, which lists the user's songs. The iTunes™ application 306 can be used for accessing, playing and organizing media, including digital music, images, and video files.

The backup component 117 can be activated, for example, to perform backup operations or to restore media content within the iTunes™ application 306 or another application 228 using a backup interface. In one implementation, the user can activate the backup interface from the user interface using a user-selectable backup icon 312 in the application launch bar 304. As another example, the backup interface can be activated from the menu bar 302. The ability to activate the backup interface from the application 306 can be provided, for example, by an SPI.

The menu bar 302 can include a backup component options menu in addition to the activation selection. The backup component options menu can include selections allowing a user to specify data to include in a particular backup operation. For example, in iTunes™, the user can identify which content to include in backup operations (e.g., playlists, but not play counts, purchased songs, but not others, etc.).

In addition, the user can recover songs that were previously included, but are now missing from the iTunes™ library. For example, the backup component can have performed at least one backup operation at an earlier time that included the missing songs. Consequently, the user can enter the backup interface to search for the missing songs or files in a backup snapshot of the iTunes™ application. The user can then restore a view of the iTunes™ application corresponding to that prior time (e.g., restoring a particular song or an entire application state). As used herein, a snapshot refers to backup data stored in a historical archive that corresponds to a particular view (e.g., of the application interface) taken at a particular point in time and can includes elements, items, or other information associated with the view as specified by the backup component 117. An SPI can facilitate the generation of snapshots corresponding to visual representations of the application interface.

In other implementations, the user can choose to enter the backup interface directly from an operating system menu. In some implementations, the backup component 117 can include several icons or menus available in other locations within the user interface 300 or running applications, thereby providing several options for activating or launching the backup interface.

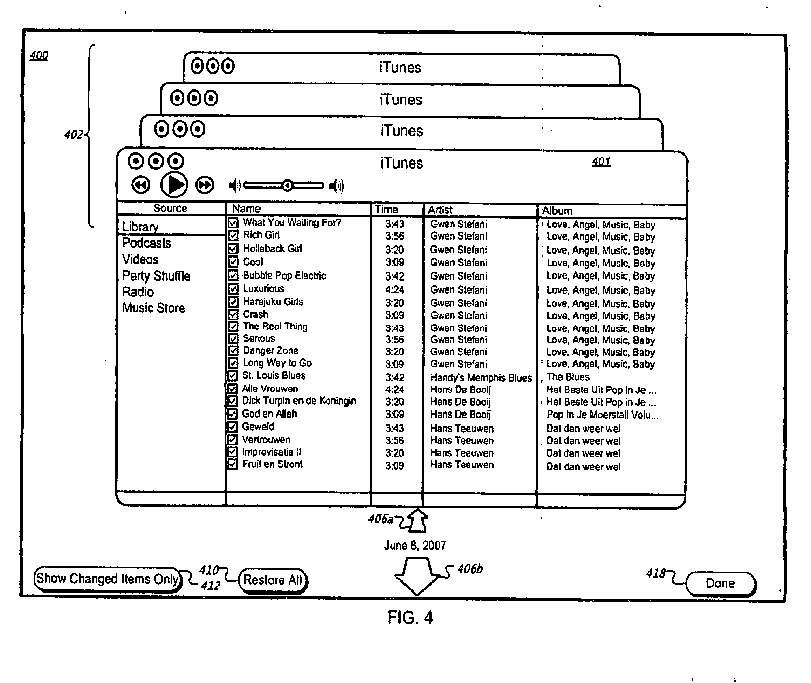

FIG. 4 is a screen shot depicting an example of an initial state for a backup interface 400 after the backup interface has been initiated. The backup interface 400 includes snapshots 402 including a current snapshot 401, and various function buttons described below. As shown, the current snapshot 401 is displaying the most recent snapshot of the iTunes application interface because the backup interface was entered using the iTunes application interface. The current snapshot 401 can show the contents corresponding to the currently selected snapshot, or a portion thereof. In this particular example, a date is presented beneath the snapshot indicating when the snapshot was taken (e.g., when the corresponding backup operation was performed).

In some implementations, the user can select elements (e.g., items or other content) within the snapshots. For example, the user can select a particular snapshot from the snapshots 402, representing a previous view of the iTunes™ application corresponding to a particular point in time, and next select one or more songs to restore using the backup interface 400. For example, the selected one or more songs can be songs that are missing from the current library.

In some implementations, the snapshots 402 can include a number of individual snapshots represented in a stack, each of which represents earlier versions or states of the iTunes™ library that have been backed up in previous backup operations. Each snapshot provides a screenshot representation of the earlier version of the iTunes™ library at a particular point in time. An SPI (e.g., SPI 229) can be used to generate the snapshots such that a representation of the application user interface is displayed. A specified number of snapshots 402 can be presented in the backup interface 400 at any given time. However, there can be many more snapshots than are presently shown.

A user can select a particular snapshot of the snapshots 402 by selecting a snapshot from the stack, causing that snapshot to become the current snapshot 401. Alternatively, the user can use one or more navigation buttons to move between snapshots 402. For example, arrow buttons 406a and 406b can be used to navigate snapshots 402 backward or forward in time, respectively. Alternatively, additional snapshots can be represented in the backup interface 400, for example, as a set of tick marks (not shown). The user can select a particular tick mark in order to bring a particular snapshot as the current snapshot 401.

The backup interface 400 can also include function controls. For example, the backup interface 400 can include a restore button 410 that, when selected, restores the view to the selected state represented by the selected snapshot. In some implementations, this also exits the backup interface. For example, a user can select one element in a snapshot and then select the restore button 410 to modify the current version of the element selected (e.g., restore the state of the view). For example, in iTunes™, the user can select a few songs to restore, and this can trigger the restore button to display a more precise message, such as "restore selection."

In one implementation, a "changed items only" button 412 filters the snapshots to show only those that differ from the current state. In one implementation, the "changed items only" button 412 does not refer to the incremental changes between snapshots 402, but rather when invoked acts to omit those snapshots whose states are identical to the current state of the iTunes™ library from presentation in the snapshots 402. For example, if the most recent snapshot is identical to another snapshot that occurs earlier in time, selecting the changed items only button 412, in one implementation, causes the backup interface to cease displaying one of these versions, e.g., by removing the earlier snapshot from display. This can help the user to view only snapshots that contain changes to the current version.

A "done" button 418 can be selected to exit the backup interface 400 and return the user to the desktop user interface 300. In some implementations, the backup interface can automatically exit upon a particular snapshot being restored. In some implementations, the user can minimize the backup interface for purposes of navigating to other applications, such as an e-mail application or a web browser.

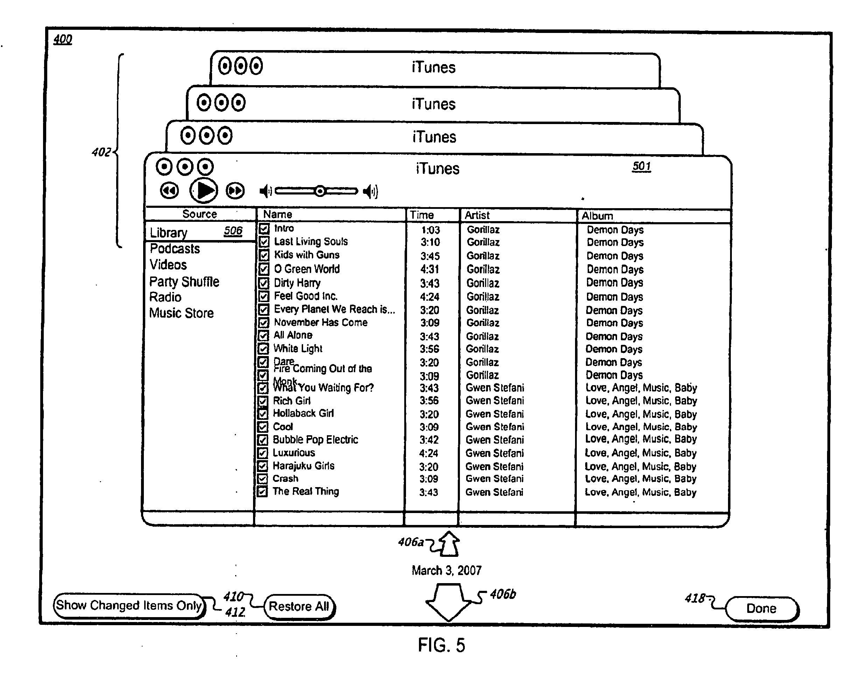

FIG. 5 is a screen shot depicting the backup interface 400 where an earlier snapshot has been selected from the snapshots 402. The iTunes™ application interface corresponding to the selected snapshot (labeled March 3, 2007) is displayed as the current snapshot 501. This earlier version of the iTunes™ application shows a file tree where the user has selected a source library 506, which can contain several songs and albums. The songs and albums can be sorted and arranged, e.g., by name, length, artist, or album title, to name a few examples, In some implementations, other sorting fields can be used, such as sorting by genre. In addition, the user can use the information in the source library 506 to create separate song lists known as playlists. Playlists can combine several artists and albums in one list and can be presented in a user-selected order. Playlists can also be burned to compact discs, transferred to an iPod™ device (available from Apple Inc., in Cupertino, California), or played on the computer 102.

In this example, the source library 506 displayed in the current snapshot 501 includes songs that are not found in the current version of the library outside of the backup interface (e.g., the library shown in FIG. 3). In particular, the songs include twelve songs by the artist "Gorillaz." For example, the user could have lost these twelve songs from the source library (e.g., by deleting them or some system error) after the earlier version was backed up (i.e., sometime after March 3, 2007). The user may wish to restore these twelve missing songs and can do so by using the backup interface 400.

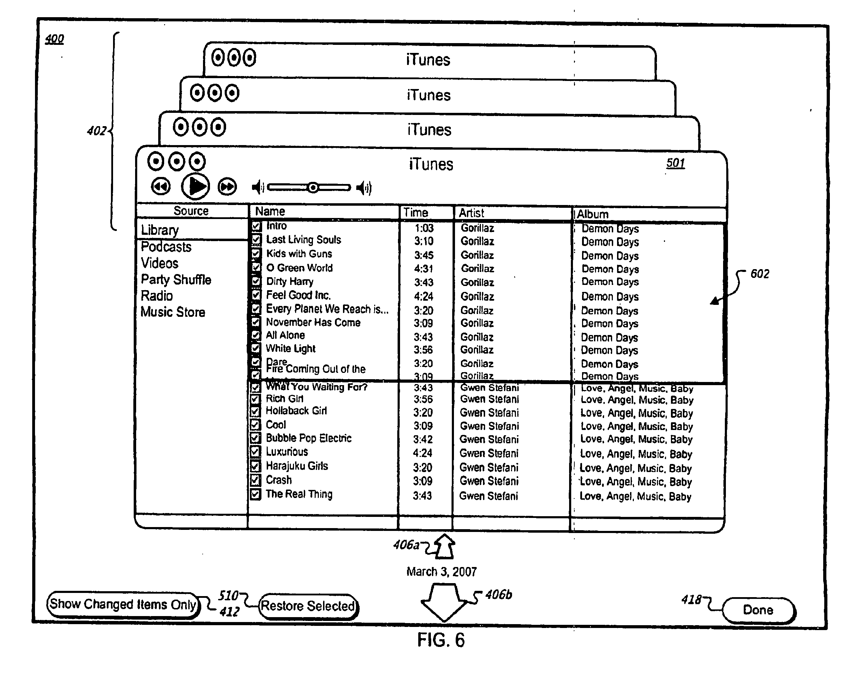

FIG. 6 is a screen shot depicting the backup interface 400 of FIG. 5 wherein a portion of the current snapshot 502 has been selected for restoration. For example, the user can select the twelve missing songs 602 within the current snapshot 502. In some implementations, upon selecting the missing songs 602, the restore button 410 can change, as shown, from "Restore All" to restore button 610 "Restore Selected". If the user selects the "Restore Selected" button, the selected songs will be restored to the library of the current iTunes™ application (e.g., of FIG. 3). Upon selecting the restore button 610, the backup interface 400 can exit and return the user to the user interface 300 of FIG. 3 where the library of the current iTunes™ application reflects the restoration of the missing songs. In some implementations, the user can choose to remain in the backup interface 400 to perform further restorations.

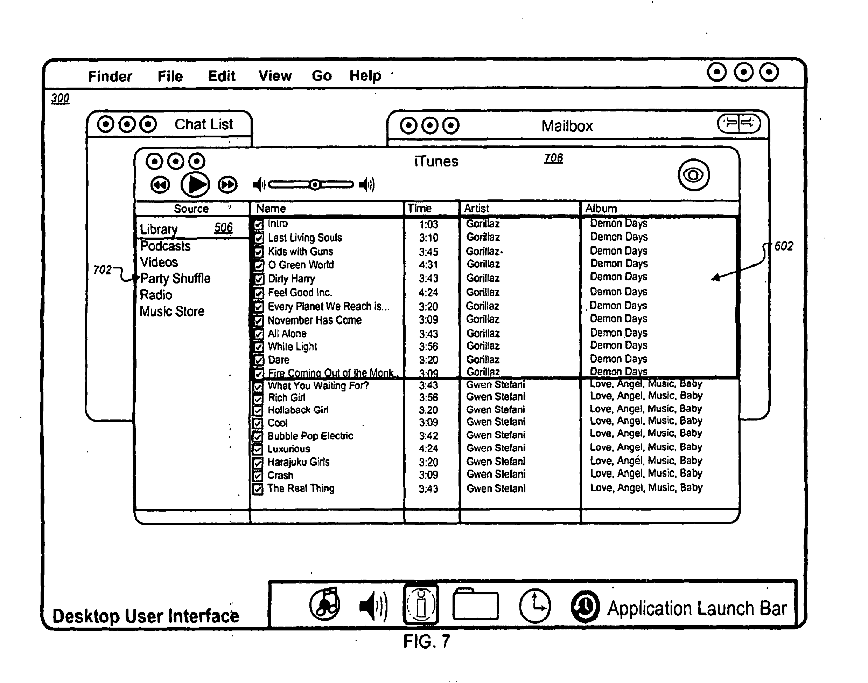

FIG. 7 is a screen shot showing the desktop user interface 300 after some contents from an earlier version have been restored using the backup interface 400. As shown, the iTunes™ application user interface 700 includes a library 706 that now includes the restored twelve songs. In this example, actual data content represented by one snapshot was collected and restored in the iTunes™ application. For example, the backup component 117 can retrieve the selected songs and restore them (e.g., copy them) to their original location in the file system.

Alternatively, the backup component can restore only the organization of the data. For example, in the iTunes™ application, the user can have a number of different playlists, such as the "Party Shuffle" playlist. 702. Each playlist can contain a different collection of songs. In general, songs which appear in more than one playlist do not correspond to multiple copies of the song because the playlist is just considered a particular organization of songs in the library 706. Therefore, if the user restores a playlist using the backup component, only the playlist organization can require restoration. Thus, the data corresponding to the underlying songs does not require restoration in such an example, unless they are also missing from the source library 706. These and other types of non-file form data (e.g., metadata or other application data) can be restored using the backup component.

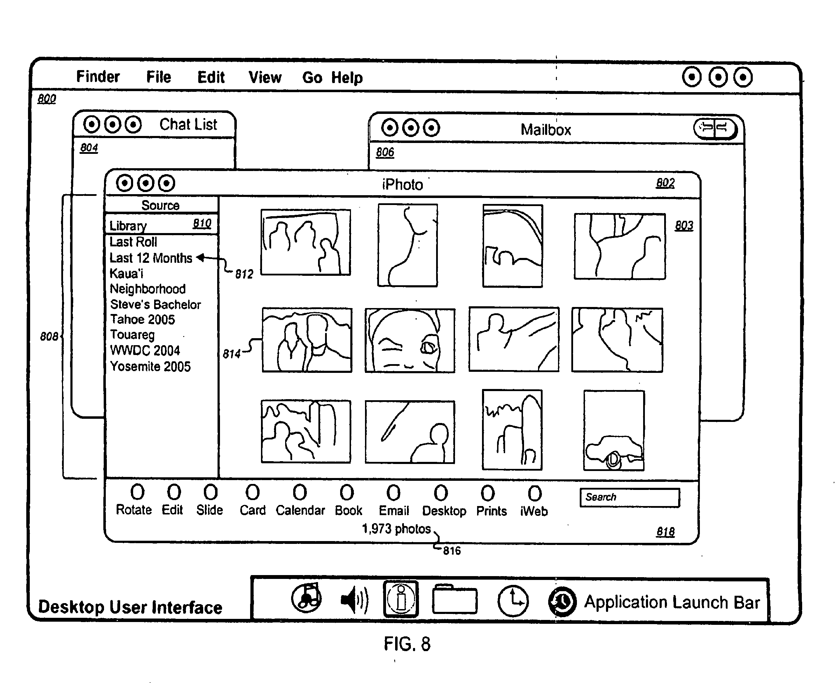

FIG. 8 is a screen shot depicting an example of a desktop user interface 800 with multiple open applications. A user has launched an iPhoto™ application 802, (available from Apple Inc., in Cupertino, California) which is currently presented in the foreground. Additionally, interfaces for a chat application 804, and a mail application 806 are presented in the background. In particular, the iPhoto™ application 802 includes an interface that displays contents of the user's library 810, which lists the user's photo albums, each of which can include zero or more photographs or other media content. The iPhoto™ application 802 can be used for accessing, storing, and organizing media, such as images, scanned photographs, and video contents. While currently interacting with the iPhoto™ application 802, or at some other time, a user can initiate a backup interface with respect to the iPhoto™ application 802.

As shown in FIG. 8, the interface for the iPhoto™ application 802 includes a source pane 808 for navigating the content stored in the library 810. For example, the user can select a particular photo album to view the contents in the photo album (e.g. photographs, images, and video content). The contents can be displayed, for example, as thumbnails in a display pane 803. In this example, the user has selected a "Library" item 810, and the iPhoto™ application 802 has presented, in the interface, images in the library 810.

In some implementations, the user can select one or more photo albums to display the contents of each such album in the iPhoto™ application 802. For example, the user can select a "Last 12 Months" photo album 812, and this can display all images collected in the selected album in the display pane 803. In some implementations, the contents can be displayed as thumbnail images, such as thumbnail image 814. In other implementations, the contents can be displayed in list form using the file name as the displayed image. The contents in each photo album can be different sets of images, for example, organized by event, theme, time, category, and the like.

In some implementations, a photograph count 816 can be presented to the user showing how many images are in the library 810 or in the currently selected photo album. In general, the user can create, delete, or transfer images in the photo albums and the photograph count 816 can adjust accordingly when a photograph is added or deleted, or when the user switches between photo albums. As shown, the photograph count 816 displays "1,973 photos," indicating that there are currently 1,973 photographs in the library 810.

In some implementations, in addition to creating, deleting and transferring images in the photo album, the user can also modify the images by selecting various photograph options shown in a control panel 818. The control panel 818 can include options allowing the user to rotate, edit, e-mail, or generally move the images into other configurations. For example, the control panel 818 can present options to the user to select images from several photo albums to create a book or calendar entry using the selected images. As another example, the control panel 818 provides that the user can search for images using the application.

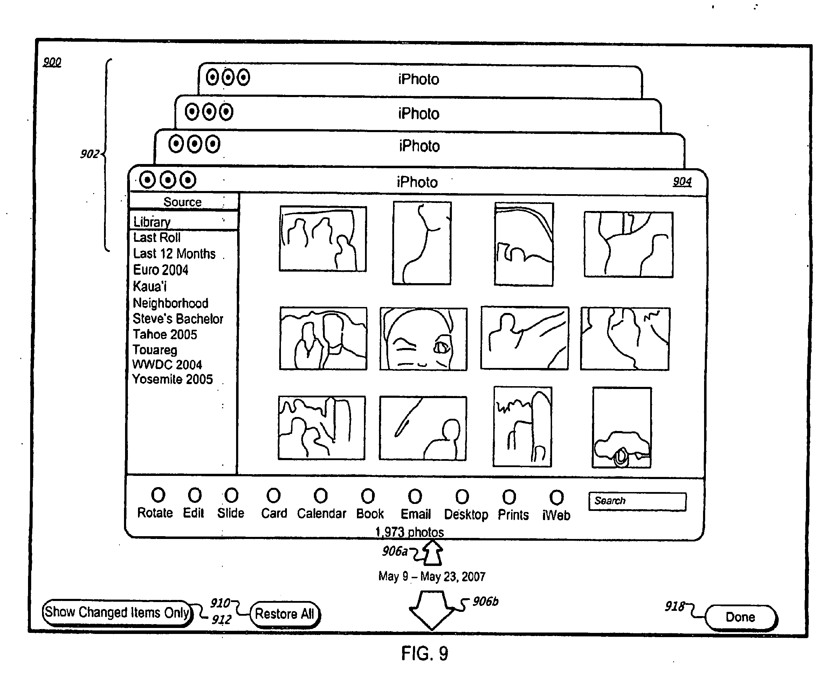

FIG. 9 is a screen shot depicting an example of a state for a backup interface 900 after the backup interface has been initiated. The backup interface 900 includes snapshots 902 including a current snapshot 904, and function buttons. The current snapshot 904 is displaying a snapshot of the iPhoto™ application interface. The current snapshot 904 is displaying as encompassing a range from "May 9 - May 23, 2007", where the range indicates the time in which the displayed contents of the current snapshot 904 were unchanged. Generally, each snapshot 902 provides a representation of the iPhoto™ application interface including the various elements, items, and layout of the iPhoto™ application 802 corresponding to the period of time covered by the snapshot.

The snapshots 902 can include a number of individual snapshots represented in a stack, each of which provide a visual representation of earlier versions or states of the iPhoto™ library that have been backed up in previous backup operations. Thus, each snapshot 902 provides a screenshot representation of the earlier version of the iPhoto™ library at a particular point in time. A specified number of snapshots 902 can be presented in the backup interface 900 at any given time. However, there can be many more snapshots than are presently shown.

A user can select a particular snapshot by selecting a snapshot from the stack, causing that snapshot to become the current snapshot 904. Alternatively, the user can use one or more navigation buttons to move between snapshots 902. For example, arrow buttons 906a and 906b can be used to navigate snapshots 902 backward or forward in time, respectively. Alternatively, additional snapshots can be represented in the backup interface 900, for example, as a set of tick marks (not shown). The user can select a particular tick mark in order to bring a particular snapshot as the current snapshot 904.

The backup interface 900 can also include function controls. For example, the backup interface 900 a restore button 910 that, when selected, restores the view to the selected state represented by the selected snapshot. In some implementations, this also exits the backup interface. A user can select an element in a snapshot and then select the restore button 910 to modify the current version of the selected element (e.g., restore the state of the view). For example, in the iPhoto™, the user can select a few photos to restore, and this can trigger the restore button to display a more precise message, such as "restore selection."

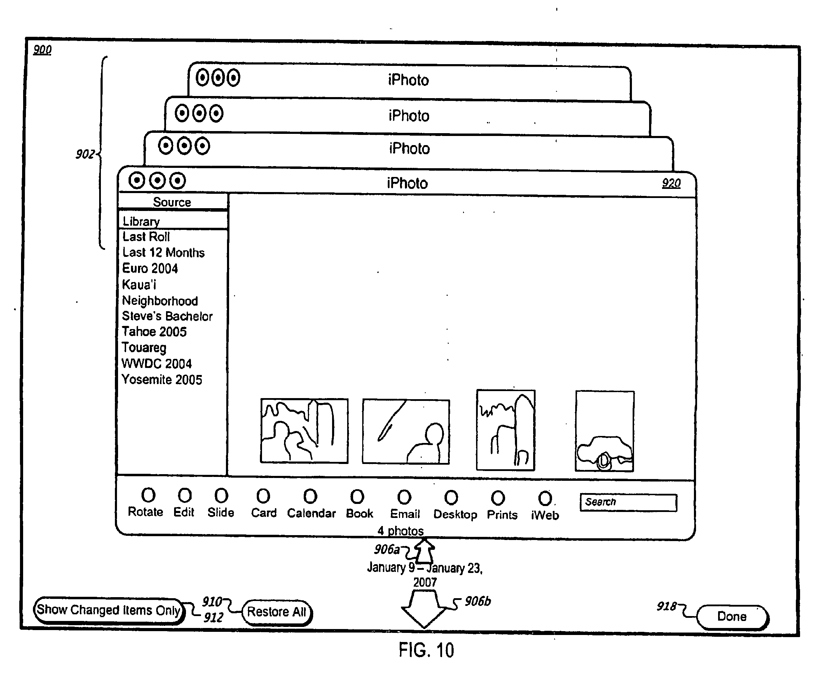

In some implementations, the user can select a "show changed items only" button 912 to modify the content to be presented in the interface 902. For example, when the button "show changed items only" 912 has been selected, the timeline can adjust to display only items with reference to the most recent snapshot 904. An example of selecting the "show changed items only" button 912 is described with reference to FIG. 10.

FIG. 10 is a screen shot depicting an example showing changed items in a backup interface. In particular, the user has checked the "show changed items only" button 912 for purposes of identifying only the changed items with reference to the most recent snapshot (i.e., snapshot 904 of FIG. 9). When the "show changed items only" button 912 is selected, all images that are present in the most recent snapshot are deleted from the prior snapshots. For example, the "January 9 - January 23, 2005" snapshot 920 shows four photographs that are not present in the snapshot 904 of FIG. 9. Thus, when the button 912 is selected, the content of each snapshot is presented relative to the content of the most recent snapshot. In another implementation, the button 912 can filter out snapshots 902 that are identical to the current snapshot, and leave the remaining snapshots intact.

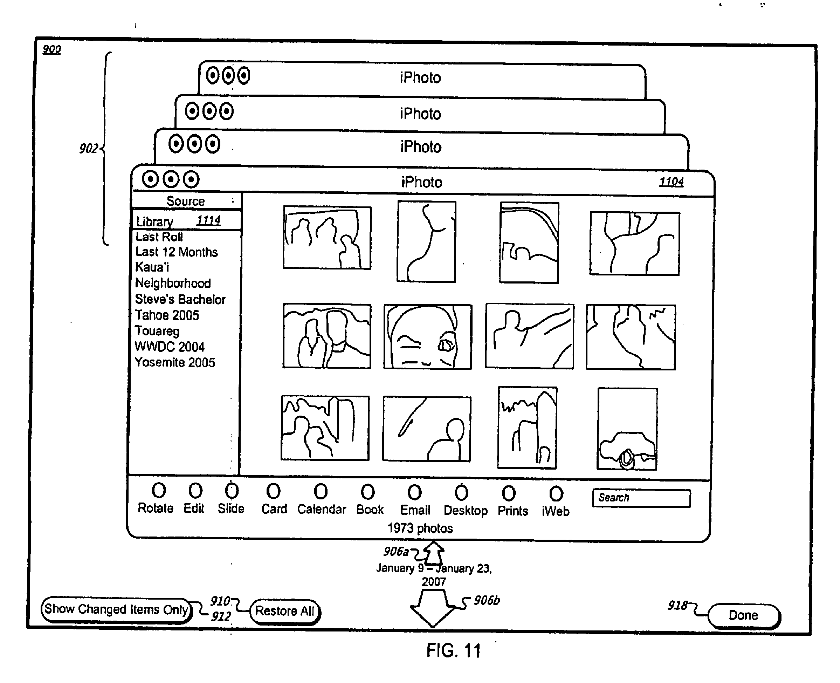

FIG. 11 is a screen shot depicting an example backup interface 900 after the backup interface has been initiated. The iPhoto™ application interface is represented in a current snapshot 1104. A number of snapshots 902 are represented in a stack. When a snapshot 902 is selected as the current snapshot 1104, an associated date is presented indicating when the snapshot was taken (e.g., when the backup operation occurred). In some implementations, a date range can be displayed indicating that the content in the currently displayed snapshot is the same throughout the time period, as shown, for example, in snapshot 1104. A date range can be used to compress several unchanged snapshots to a single snapshot. The restore 910 function button can operate substantially as described earlier with reference to FIG. 4. Each snapshot 902 can be a representation of the iPhoto™ application showing the state of a library 1114 for each snapshot 902. The user can navigate between snapshots 902 with the current snapshot 1104 corresponding to the selected snapshot 902.

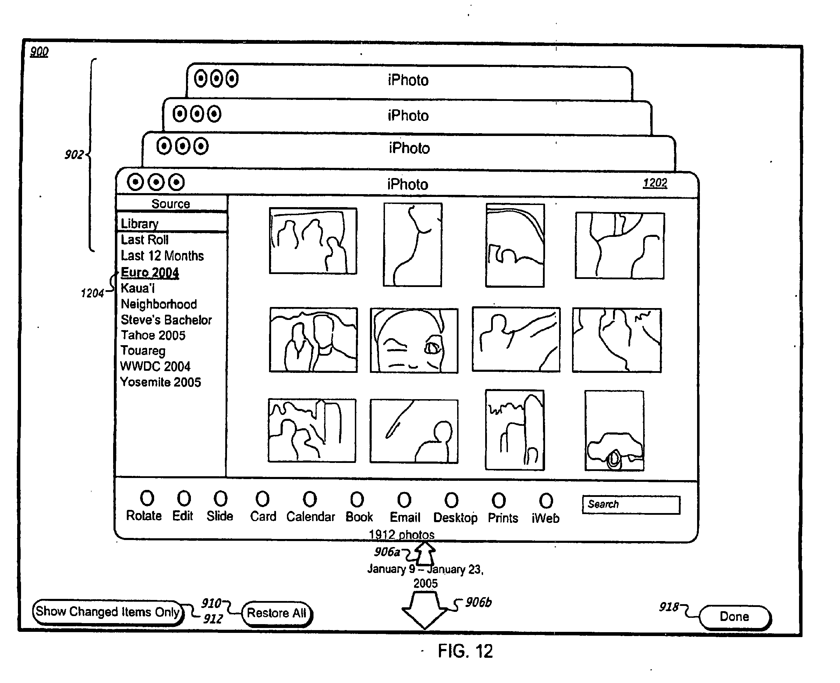

FIG. 12 is a screen shot depicting the backup interface 900 of FIG. 11 where a new current snapshot 1202 has been selected from the snapshots 902. The iPhoto™ application interface corresponding to the snapshot 1202 (corresponding to a displayed date range of January 9 - January 23, 2005) is displayed. As shown, the number of photographs 816 in the snapshot 1202 is 1,912, whereas the most recent snapshot (snapshot 904 of FIG. 9) contains 1,973 pictures.

The user can search the contents of the snapshot 1202, e.g., for a photo album that is not present in the current application interface (e.g., as shown in FIG. 8) such as the "Euro 2004" album 1204 shown in snapshot 1202. Accordingly, the user can navigate to snapshot 1202 to access the content of the album 1204, for example, to restore the contents of that album.

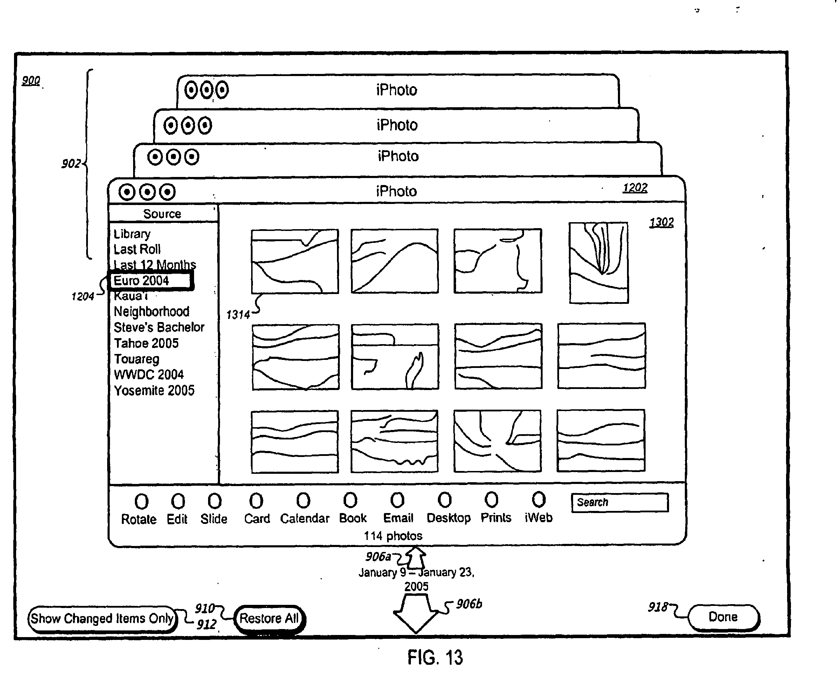

FIG. 13 is a screen shot depicting the backup interface 900 where the snapshot 1202 has been selected from the snapshots 902. However, the user has selected the album 1204 "Euro 2004" within the snapshot 902. Consequently, the display pane 1302 of the snapshot 1202 now displays the contents of the "Euro 2004" album 1204. The user can select a restore button 910 to restore the content of the "Euro 2004" album. As another example, the user can choose to restore only a portion of the album 1204 shown in snapshot 1202 by selecting particular images in the display pane 1302. For example, to only restore image 1314, the user can select the image 1304 and then select the restore button 910.

Selecting the restore button 910 causes the album 1204, or a selected portion thereof (e.g., image 1314), to be restored in the current view of the iPhoto™ application and is thereafter accessible to the user. For example, the entire album 1204 can be restored to the library in the iPhoto™ application allowing the user to modify the contents in the album 1204. In some implementations, the caption of the restore button 910 can change depending on the user's selection, for example, to "Restore 1 image" when a user selects one image.

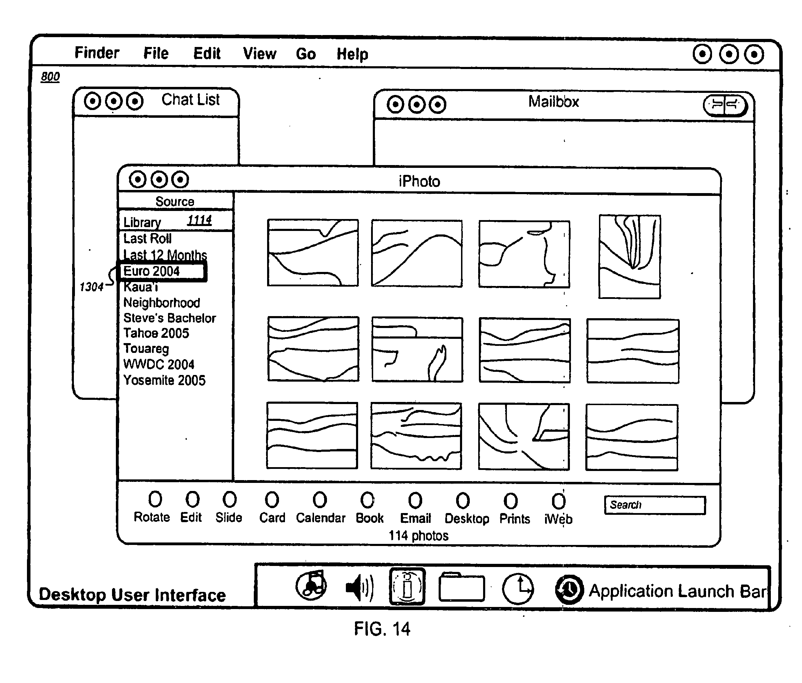

FIG. 14 is a screen shot showing another example of the desktop user interface 800 after some contents from a snapshot representing a previous view of the application have been restored using the backup interface. Particularly, the user here selected the Euro 2004 folder 1304 for restoration from the snapshot 1202. In FIG. 14, the iPhoto™ libray 1114 now includes the restored album "Euro 2004" 1304. Both the album and the corresponding image content within the album have been restored to the iPhoto™ application. In some implementations, the user can choose to restore only particular image content. For example, images can be selected from a backup snapshot and restored in a new album (e.g., a "restored" album). Alternatively, the selection can be stored in an existing album.

The above examples involve backup versions of music libraries or photo albums. Many different types of applications, items, system settings, preferences, elements or processes can be backed up and made accessible through a backup interface.

In another implementation, the backup interface can be used to present backup information associated with a messaging application. For example, the user can enter the backup interface to restore one or more deleted friends from a "buddy list", deleted conversations, preferences, and the like.

In the above description, for purposes of explanation, numerous specific details are set forth in order to provide a thorough understanding. It will be apparent, however, to one skilled in the art that implementations can be practiced without these specific details. In other instances, structures and devices are shown in block diagram form in order to avoid obscuring the disclosure.

In particular, one skilled in the art win recognize that other architectures and graphics environments can be used, and that the examples can be implemented using graphics tools and products other than those described above. In particular, the client/server approach is merely one example of an architecture for providing the functionality described herein; one skilled in the art will recognize that other, non-client/server approaches can also be used. Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

An apparatus for performing the operations herein can be specially constructed for the required purposes, or it can comprise a general-purpose computer selectively activated or reconfigured by a computer program stored in the computer. Such a computer program can be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing data including electronic instructions, and each coupled to a computer system bus.

The algorithms and modules presented herein are not inherently related to any particular computer or other apparatus. Various general-purpose systems can be used with programs in accordance with the teachings herein, or it can prove convenient to construct more specialized apparatuses to perform the method steps. The required structure for a variety of these systems will appear from the description. In addition, the present examples are not described with reference to any particular programming language. It will be appreciated that a variety of programming languages can be used to implement the teachings as described herein. Furthermore, as will be apparent to one of ordinary skill in the relevant art, the modules, features, attributes, methodologies, and other aspects can be implemented as software, hardware, firmware or any combination of the three. Of course, wherever a component is implemented as software, the component can be implemented as a standalone program, as part of a larger program, as a plurality of separate programs, as a statically or dynamically linked library, as a kernel loadable module, as a device driver, and/or in every and any other way known now or in the future to those of skill in the art of computer programming. Additionally, the present description is in no way limited to implementation in any specific operating system or environment.

The subject matter described in this specification can be implemented as one or more computer program products, i.e., one or more modules of computer program instructions encoded on a computer readable medium for execution by, or to control the operation of, data processing apparatus. The instructions can be organized into modules (or engines) in different numbers and combinations from the exemplary modules described. The computer readable medium can be a machine -readable storage device, a machine-readable storage substrate, a memory device, a composition of matter effecting a machine -readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

While this specification contains many specifics, these should not be construed as limitations on the scope of what may be claimed, but rather as descriptions of features specific to particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The subject matter of this specification has been described in terms of particular embodiments, but other embodiments can be implemented and are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other variations are within the scope of the following claims.

## Claims

1. A system comprising:
a backup component (117), the backup component (117) for capturing a snapshot of a user interface (501, 1202) of an application as part of a backup operation; and
a first interface (234) coupling the backup component (117) and the application (228), the first interface (234) providing a communication link between the backup component (117) and the application 228) such that a backup user interface (400, 900) can display a snapshot of the application,
**characterized in that**,
the user interface (501, 1202) of the application corresponding to the snapshot of the application is displayed.

2. The system of claim 1, the communication link provided by the first interface (234) includes instructions describing how to present the backup user interface (400, 900) and the data to include in the backup user interface (400, 900).

3. The system of claim 2, where the instructions describing how to present the backup user interface (400, 900) includes instructions to display the backup user interface (400, 900) and instructions to exit the backup user interface (400, 900).

4. The system of claim 2, where instructions describing the data to include in the backup user interface (400, 900) include instructions for integrating backup data in a form of a user interface for the application.

5. The system of claim 1, wherein the backup component provides backup operations and restoration capability for the system.

6. The system of claim 1, wherein a user can select the snapshot or a portion of the displayed snapshot to be restored.

7. The system of claim 5, where the communication provided by the second interface includes communication regarding a status of backup operations.

8. The system of claim 6, further comprising a second interface wherein the first interface is specific to the application and the second interface is specific to a second application.

9. The system of claim 1, where the application is a mail application.

10. The system of claim 1, where the application is an audio application.

11. A method comprising:
receiving from an application (228), while a current view of an application is displayed in a user interface (401, 904), a first user input requesting that a history view associated with the current view of the application be displayed, wherein the user interface (501, 1202) of the application corresponding to the history view is displayed;
retrieving information associated with the current view of the application;
retrieving from a backup archive backup data associated with the history view;
providing the retrieved backup data and information to a backup component for presentation to the user;
receiving a second user input selecting an element in the history view; and
restoring the selected element to the current view of the application.

12. The method of claim 11, where retrieving information associated with the current view of the application includes retrieving format information.

13. The method of claim 12, where the format information includes information for generating a user interface layout for the application.

14. The method of claim 13, further comprising:
using the backup data and the format information to generate a plurality of visual representations corresponding to earlier versions of the current view of the application.

15. The method of claim 14, further comprising:
receiving a third user input selecting a particular visual representation from a stack including the plurality of visual representations, for presentation.

## Patentansprüche

1. System, aufweisend:
eine Backup-Komponente (117), wobei die Backup-Komponente (117) zum Erfassen eines Standes eines Schnappschusses einer Benutzerschnittstelle (501, 1202) einer Anwendung als Teil einer Backup-Operation dient; und
eine erste Schnittstelle (234), die die Backup-Komponente (117) und die Anwendung (228) koppelt, wobei die erste Schnittstelle (234) eine Kommunikationsverbindung zwischen der Backup-Komponente (117) und der Anwendung (228) bereitstellt, so dass eine Backup-Benutzerschnittstelle (400, 900) einen Schnappschuss der Anwendung anzeigen kann,
**dadurch gekennzeichnet, dass**
die Benutzerschnittstelle (501, 1202) der Anwendung, die dem Schnappschuss der Anwendung entspricht, angezeigt wird.

2. System nach Anspruch 1, wobei die durch die erste Schnittstelle (234) bereitgestellte Kommunikationsverbindung Anweisungen enthält, die beschreiben, wie die Backup-Benutzerschnittstelle (400, 900) dargestellt wird, und die die in der Backup-Benutzerschnittstelle (400, 900) zu enthaltenden Daten beschreiben.

3. System nach Anspruch 2, wobei die Anweisungen, die beschreiben, wie die Backup-Benutzerschnittstelle (400, 900) dargestellt wird, Anweisungen zum Anzeigen der Backup-Benutzerschnittstelle (400, 900) und Anweisungen zum Beenden der Backup-Benutzerschnittstelle (400, 900) enthalten.

4. System nach Anspruch 2, wobei die Anweisungen, die die in der Backup-Benutzerschnittstelle (400, 900) zu enthaltenden Daten beschreiben, Anweisungen zum Integrieren der Backup-Daten in eine Form einer Benutzerschnittstelle für die Anwendung enthalten.

5. System nach Anspruch 1, wobei die Backup-Komponente Backup-Operationen und Wiederherstellungsfähigkeit für das System bereitstellt.

6. System nach Anspruch 1, wobei ein Benutzer den Schnappschuss oder ein Teil des angezeigten Schnappschusses wählen kann, um wiederhergestellt zu werden.

7. System nach Anspruch 5, wobei die durch die zweite Schnittstelle bereitgestellte Kommunikation Kommunikation bezüglich eines Zustands von Backup-Operationen enthält.

8. System nach Anspruch 6, weiterhin aufweisend eine zweite Schnittstelle, wobei die erste Schnittstelle für die Anwendung spezifisch ist und die zweite Schnittstelle für eine zweite Anwendung spezifisch ist.

9. System nach Anspruch 1, wobei die Anwendung eine Mailanwendung ist.

10. System nach Anspruch 1, wobei die Anwendung eine Audioanwendung ist.

11. Verfahren, aufweisend:
Empfangen von einer Anwendung (228), während eine aktuelle Ansicht einer Anwendung in einer Benutzerschnittstelle (401, 904) angezeigt wird, einer ersten Benutzereingabe, die anfordert, dass eine Historienansicht, die mit der aktuellen Ansicht der Anwendung assoziiert ist, angezeigt wird, wobei die Benutzerschnittstelle (501, 1202) der Anwendung, die der Historienansicht entspricht, angezeigt wird;
Abrufen von Informationen, die mit der aktuellen Ansicht der Anwendung assoziiert sind;
Abrufen, aus einem Backup-Archiv, von Backup-Daten, die mit der Historienansicht assoziiert sind;
Bereitstellen der abgerufenen Backup-Daten und Informationen an eine Backup-Komponente zur Darstellung an den Benutzer;
Empfangen einer zweiten Benutzereingabe, die ein Element in der Historienansicht auswählt; und
Wiederherstellen des ausgewählten Elements für die aktuelle Ansicht der Anwendung.

12. Verfahren nach Anspruch 11, wobei das Abrufen von Informationen, die mit der aktuellen Ansicht der Anwendung assoziiert sind, Abrufen von Formatinformationen enthält.

13. Verfahren nach Anspruch 12, wobei die Formatinformationen Informationen zum Erzeugen eines Benutzerschnittstellen-Layouts für die Anwendung enthalten.

14. Verfahren nach Anspruch 13, weiterhin aufweisend:
Verwenden der Backup-Daten und der Formatinformationen, um eine Mehrzahl von visuellen Repräsentation, die früheren Versionen der aktuellen Ansicht der Anwendung entsprechen, zu erzeugen.

15. Verfahren nach Anspruch 14, weiterhin aufweisend:
Empfangen einer dritten Benutzereingabe, die eine bestimmte visuelle Repräsentation von einem Stack auswählt, der die Mehrzahl an visuellen Repräsentationen umfasst, zur Darstellung.

## Revendications

1. Un système comprenant :
un composant de sauvegarde (117), le composant de sauvegarde (117) servant à capturer un instantané d'une interface utilisateur (501, 1202) d'une application en tant que partie d'une opération de sauvegarde ; et
une première interface (234) couplant le composant de sauvegarde (117) et l'application (228), la première interface (234) procurant une liaison de communication entre le composant de sauvegarde (117) et l'application (228) telle qu'une interface utilisateur de sauvegarde (400, 900) puisse afficher un instantané de l'application,
**caractérisé en ce que**
l'interface utilisateur (501, 1202) de l'application correspondant à l'instantané de l'application est affichée.

2. Le système de la revendication 1, dans lequel la liaison de communication procurée par la première interface (234) comprend des instructions décrivant la manière de présenter l'interface utilisateur de sauvegarde (400, 900) et les données à inclure dans l'interface utilisateur de sauvegarde (400, 900).

3. Le système de la revendication 2, dans lequel les instructions décrivant la manière de présenter l'interface utilisateur de sauvegarde (400, 900) comprennent des instructions pour afficher l'interface utilisateur de sauvegarde (400, 900) et des instructions pour sortir de l'interface utilisateur de sauvegarde (400, 900).

4. Le système de la revendication 2, dans lequel les instructions décrivant les données à inclure dans l'interface utilisateur de sauvegarde (400, 900) comprennent des instructions pour intégrer des données de sauvegarde dans une forme d'une interface utilisateur pour l'application.

5. Le système de la revendication 1, dans lequel le composant de sauvegarde fournit des opérations de sauvegarde et des capacités de restauration du système.

6. Le système de la revendication 1, dans lequel un utilisateur peut sélectionner l'instantané ou une partie de l'instantané affiché à restaurer.

7. Le système de la revendication 5, dans lequel la communication procurée par la seconde interface comprend une communication concernant un statut des opérations de sauvegarde.

8. Le système de la revendication 6, comprenant en outre une seconde interface, la première interface étant spécifique à l'application et la seconde interface étant spécifique à une seconde application.

9. Le système de la revendication 1, dans lequel l'application est une application de courrier électronique.

10. Le système de la revendication 1, dans lequel l'application est une application audio.

11. Un procédé comprenant :
la réception depuis une application (228), pendant qu'une vue courante d'une application est affichée dans une interface utilisateur (401, 904), d'une première entrée utilisateur requérant qu'une vue historique associée à la vue courante de l'application soit affichée, l'interface utilisateur (501, 1202) de l'application correspondant à la vue historique étant affichée ;
la récupération d'informations associées à la vue courante de l'application ;
la récupération depuis une archive de sauvegarde de données de sauvegarde associées à la vue historique ;
la délivrance des informations et données de sauvegarde récupérées à un composant de sauvegarde pour présentation à l'utilisateur ;
la réception d'une seconde entrée utilisateur sélectionnant un élément dans la vue historique ; et
la restauration de l'élément sélectionné à la vue courante de l'application.

12. Le procédé de la revendication 11, dans lequel la récupération d'informations associées à la vue courante de l'application comprend la récupération d'informations de format.

13. Le procédé de la revendication 12, dans lequel les informations de format comprennent des informations pour générer une disposition d'interface utilisateur pour l'application.

14. Le procédé de la revendication 13, comprenant en outre :
l'utilisation des données de sauvegarde et des informations de format pour générer une pluralité de représentations visuelles correspondant à des versions antérieures de la vue courante de l'application.

15. Le procédé de la revendication 14, comprenant en outre :
la réception d'une troisième entrée utilisateur sélectionnant une représentation visuelle particulière à partir d'une pile incluant la pluralité de représentations visuelles, pour présentation.
